# FASCICULE DE BREVET EUROPEEN

(11) **EP 0 690 663 B1**
(45) Date de publication et mention de la délivrance du brevet: **22.04.1998**
(21) Numéro de dépôt: 95114697.6
(22) Date de dépôt: 14.10.1992
(51) Int. Cl.: H05B 6/44, H05B 6/02, C21D 1/42

(54) **Inducteur de chauffage par induction de bandes métalliques**
Induktionsanordnung zum Heizen von Metallbändern
Coil arrangement for induction heating of sheet metal

(30) Priorité: 14.10.1991 FR 9112627
(43) Date de publication de la demande: 03.01.1996
(62) Demande divisionnaire de: 92402809.5
(73) Titulaire: ELECTRICITE DE FRANCE Service National, 75008 Paris (FR)
(72) Inventeur: Ferry, Georges Charles, Résidence l'Hermitage, F-78230 Le Pecq (FR); Peureux, Jean-Louis Bernard, F-89140 Villethierry (FR); Roehr, Philippe, F-68360 Soultz (FR); Delassus, Jean, f-95160 Montmorency (FR)
(74) Mandataire: Polus, Camille

(56) Documents cités:
- EP-A- 0 194 708
- EP-A- 0 407 660
- FR-A- 1 193 496
- GB-A- 2 184 927
- US-A- 2 583 227
- US-A- 3 489 875
- US-A- 3 649 804
- PATENT ABSTRACTS OF JAPAN vol. 15, no. 76 (C-809) 21 Février 1991 & JP-A-02 301 522 (MITSUBISHI HEAVY IND. LTD.) 13 Décembre 1990

## Description

La présente invention concerne les traitements par un dispositif de chauffage par induction de bandes métalliques en défilement en vue d'un traitement thermique ou de revêtement ; le revêtement peut être métallique (refusion d'étain, zinc) ou organique (cuisson de vernis ou de peinture).

Le chauffage par induction, du fait de ses qualités intrinsèques (propreté, rapidité, souplesse) est une technique particulièrement bien adaptée au traitement en continu des bandes métalliques. C'est pourquoi le chauffage par induction est mis en oeuvre pour le traitement de revêtements ou métalliques ou organiques de bandes métalliques, en particulier de l'acier.

Dans le cas du chauffage des aciers magnétiques, en particulier, les inducteurs mis en oeuvre engendrent principalement un champ magnétique longitudinal parallèle au sens de défilement de la bande métallique. La fréquence de fonctionnement des inducteurs dépend des caractéristiques électriques, magnétiques et géométriques de la bande de métal ainsi que de la densité de puissance pour les matériaux magnétiques. Les inducteurs sont cosntitués par une bobine en forme d'hélice aplatie de plusieurs spires alimentée par un convertisseur de fréquence.

Une telle bobine d'induction engendre un champ magnétique comportant une composante longitudinale importante, mais malheureusement, elle crée également une composante transversale.

La première composante longitudinale engendre des courants induits qui circulent dans l'épaisseur de la bande perpendiculairement au sens de défilement et qui la chauffent.

La composante transversale engendre des courants dits de fuites qui prennent naissance dans la bande, la parcourent initialement dans le sens de défilement de la bande et qui cherchent à retourner au point de départ en empruntant tous les chemins possibles (cylindre, carcasse métallique...).

Si dans le trajet de ces courants de fuites, on interpose un isolant, par exemple une couche de peinture ou de vernis, on fait alors apparaître une tension dont le niveau peut provoquer la destruction de cet isolant. Ce phénomène connu sous le nom de phénomène d'étincelage est particulièrement nuisible à la qualité des peintures ou vernis qui lui sont déposés sur la bande métallique.

En ce qui concerne les revêtements conducteurs, c'est-à-dire métalliques, il n'y a pas de dégradation de la qualité car les courants peuvent s'écouler librement; par contre ils peuvent endommager certaines pièces, telles que les roulements des cylindres de guidage de la bande, par example.

En ce qui concerne les revêtments organiques, on peut avoir recours à l'emploi d'un système de guidage fortement isolé (cylindre monté sur cale ou revêtu d'une matière plastique).

Pour les installations de traitement polyvalentes l'emploi de cylindres métalliques est un impératif. Dans ce dernier cas, on peut placer sur les rives de la bande en amont et en aval de l'inducteur des collecteurs de manière à localiser les défauts.

Malheureusement ce système conduit à fabriquer une bande de moindre qualité puisque ses rives sont mises à nu et il n'est pas d'une grande fiabilité puisque des claquages de peinture en "pleine peau" sont à craindre.

L'origine des courants de fuites est la composante transversale du champ magnétique créé par l'inducteur. Ce dernier présente en section la forme d'un rectangle allongé entourant la bande métallique à traiter et comporte des spires droites qui sont reliées entre elles par une connexion oblique disposée sur le côté de la spire.

Il est désirable d'éliminer les courants de fuites pour améliorer les performances des intallations de traitement de revêtement et en particulier pouvoir disposer d'installations polyvalentes. C'est pourquoi la présente invention se propose de fournir un inducteur de chauffage par induction de bandes métalliques en défilement qui permet d'éliminer les courants de fuites indésirables.

A cet effet, la présente invention a pour objet un inducteur de chauffage par induction de bandes métalliques en défilement en vue d'un traitement de revêtement, constitué par une bobine en hélice aplatie, comprenant des spires raccordées entre elles par une connexion oblique disposée sur un petit côté de la bobine et entourant la bande métallique en défilement, caractérisé en ce que l'on prévoit des moyens de suppression de la composante transversale du champ magnétique créé par ladite bobine et en ce qu'il comporte une bague constituant une spire en court-circuit et entourant le petit côté de la bobine comportant les connexions obliques entre spires.

Du fait que l'invention permet de supprimer la composante transversale du champ magnétique, les courants de fuites disparaissent et les inconvénients précités ne se produisent plus.

Cette disposition permet d'annuler les effets créés par la composante transversale du champ magnétique.

Avantageusement, ladite bague s'étend sur sensiblement toute la hauteur de la bobine.

De préférence, la bague est constituée par un tube dont l'épaisseur est supérieure à la profondeur de peau pour la fréquence du courant d'induction.

Selon une autre caractéristique, ladite bague entoure les barres de connexion de la bobine.

D'autres caractéristiques et avantages de l'invention ressortiront de la description qui suit d'exemples de réalisation de l'invention, faite en se référant au dessins annexés sur lesquels :
- la figure 1 est une vue schématique en perspective d'une installation de traitement de revêtement de bandes métalliques utilisant un chauffage par induction;
- la figure 2 présente une bobine d'induction de type classique ; et
- les figures 3 à 5 illustrent un inducteur de chauffage selon l'invention.

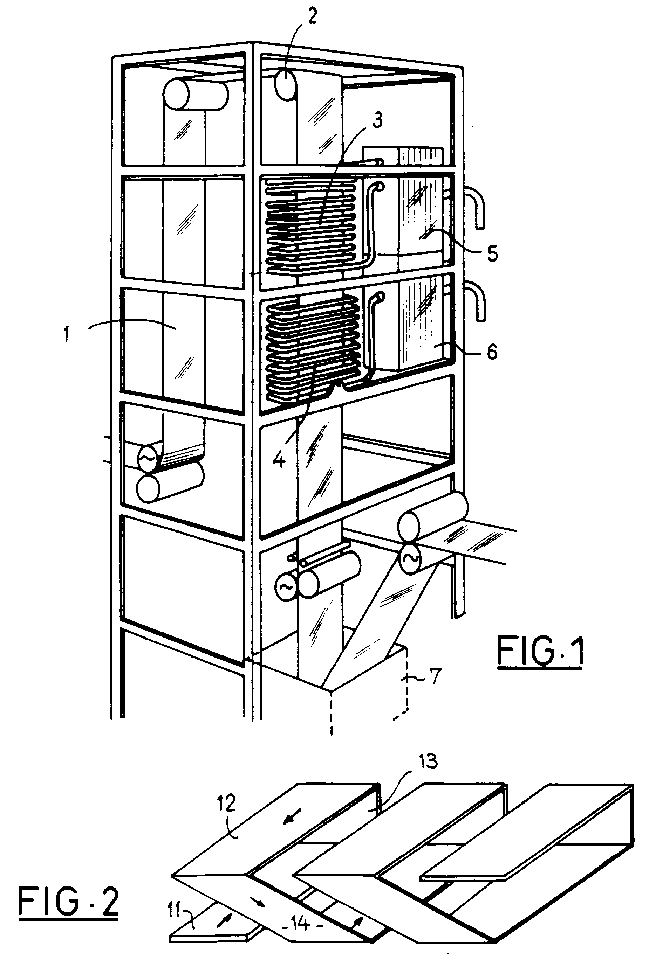

La figure 1 représente schématiquement en perspective une installation de traitement de revêtement d'une bande métallique en défilement qui utilise un dispositif de chauffage par induction.

La bande métallique 1 pénètre dans l'installation du côté droit, elle est amnée jusqu'à un cylindre de guidage 2 qui peut également constituer un cylindre de refroidissement. Elle traverse ensuite un ensemble de chauffage par induction qui, dans l'exemple représenté, comporte deux bobines d'induction successives 3 et 4 qui sont alimentées chacune par un convertisseur de fréquence 5, respectivement 6. La bande chauffée passe ensuite dans un dispositif de traitement schématisé par un bain 7.

La figure 2 représente en perspective une des bobines d'induction. Elle est constituée d'une bande métallique qui est bobinée de manière à réaliser une hélice aplatie. Dans l'exemple représenté, la bobine comporte trois spires qui sont alimentées en courant à haute fréquence du côté gauche, le courant sortant du côté droit, la circulation du courant étant symbolisée par des petites flèches.

On voit que chaque spire comporte deux grands côtés 11 et 12 et un petit côté perpendiculaire 13 ; les spires voisines sont reliées entre elles par une connexion oblique 14. C'est l'ensemble de ces connexions obliques 14 qui engendre la composante transversale du champ magnétique.

L'invention se propose d'annuler cette composante transversale.

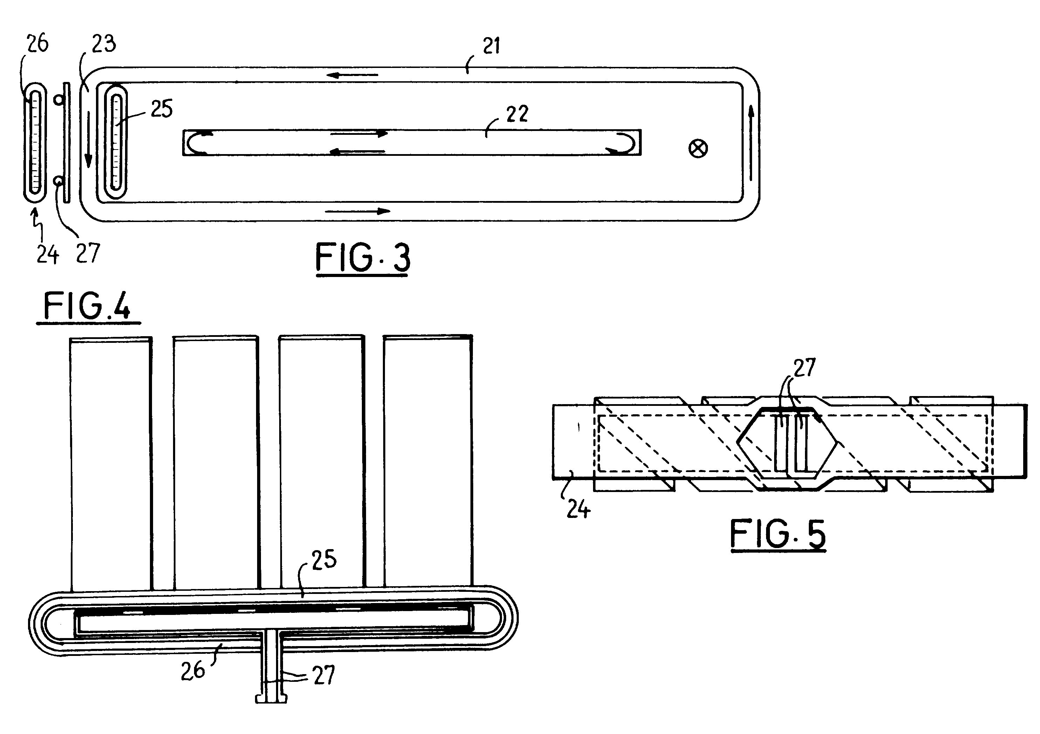

La figure 3 représente en coupe de face un inducteur 21 du type qui vient d'être décrit qui entoure la bande métallique 22.

Sur la figure 4 qui est une coupe de dessus et sur la figure 5 qui est une vue de profil on voit que cet inducteur 21 comporte quatre spires.

Conformément à la présente invention, le petit côté 23 de l'inducteur 21 qui comporte les connexions obliques entre spires est entouré par une bague 24 qui constitue une spire de court-circuit et qui présente une branche interne 25 située à l'intérieur de l'inducteur et une branche externe 26.

Cette spire de court-circuit 24 peut par exemple être réalisée au moyen d'un tube de section rectangulaire dont l'épaisseur est supérieure à la profondeur de peau à la fréquence utilisée pour le traitement. Cette spire 24 a une hauteur telle qu'elle occupe toute la hauteur de l'inducteur 21, c'est-à-dire toute la hauteur du petit côté 23.

La face de cette spire de court-circuit qui est placée en regard des spires de l'inducteur, au niveau du côté où se trouve les connexions entre spires, est le siège de courants induits de sens opposé au courant de l'inducteur. Les courants induits se regroupent sur la face en regard de la bande à chauffer.

La branche interne 25 ne constitue pas un écran au champ magnétique ; elle régénère intégralement la composante longitudinale du champ magnétique.

La boucle constituée par la branche interne 25 et la branche externe 26 et par le jeu des barres de connexion 27 de la bobine de l'inducteur va consommer et annuler dans le voisinage de la bande métallique 22 la composante transversale du champ magnétique. En effet, la boucle, sur la face en regard avec les spires et les connexions, va être le siège d'un courant induit en opposition par rapport à la composante néfaste du courant.

L'intensité du courant circulant dans cette boucle est fonction de l'inductance mutuelle entre elle et l'ensemble des spires et des connexions. L'ajustement de l'intensité peut se faire en faisant varier la géométrie de la boucle (distance entre elle et l'ensemble des connexions et des spires) ; ceci peut être obtenu en utilisant éventuellement un circuit magnétique pour accroître le couplage.

Il est donc possible d'obtenir un état dans lequel la composante transversale du champ au niveau de la bande 22 est nulle. Si cela s'avère nécessaire, la spire de court-circuit 24 sera refroidie par exemple par de l'eau.

On voit que l'invention permet de supprimer les effets néfastes de la composante de champ transversal d'un inducteur de chauffage de type connu. Elle est d'une réalisation facile et permet d'obtenir un inducteur de chauffage par induction qui peut être utilisé pour tout type de traitement de revêtement, à savoir métallique ou organique.

## Revendications

1. Inducteur (3,4) de chauffage par induction de bandes métalliques (1,22,31) en défilement en vue d'un traitement thermique ou de revêtement, constitué par une bobine en hélice aplatie, comprenant des spires (11-13) raccordées entre elles par une connexion oblique (14) disposée sur un petit côté de la bobine et entourant la bande métallique (1,22,31) en défilement, caractérisé en ce que l'on prévoit des moyens (24-26) de suppression de la composante transversale du champ magnétique créé par ladite bobine, et en ce qu'il comporte une bague (24) constituant une spire en court-circuit et entourant le petit côté (23) de la bobine (21) comportant les connexions obliques entre spires.

2. Inducteur de chauffage par induction de bandes métalliques en défilement selon la revendication 1, caractérisé en ce que ladite bague (24) s'étend sur sensiblement toute la hauteur de la bobine (21).

3. Inducteur de chauffage par induction de bandes métalliques en défilement selon la revendication 1 ou 2, caractérisé en ce que la bague (24) est constituée par un tube dont l'épaisseur est supérieure à la profondeur de peau pour la fréquence du courant d'induction.

4. Inducteur de chauffage par induction de bandes métalliques en défilement selon l'une des revendications 1 à 3, caractérisé en ce que ladite bague (24) entoure les barres de connexion (27) de la bobine.

## Patentansprüche

1. Induktionsapparat (3, 4) zum Induktionsheizen von vorbeilaufenden Metallbändern (1, 22, 31) zur Wärmebehandlung oder zur Beschichtung, bestehend aus einer abgeflachten spiralig gewickelten Spule mit Windungen (11-13), die miteinander durch eine schrägverlaufende Verbindung (14) verbunden sind, die an einer Schmalseite der Spule angeordnet ist und die das vorbeilaufende Metallband (1, 22, 31) umgeben, dadurch gekennzeichnet, daß ein Mittel (24-26) zum Unterdrücken der Transversalkomponente des Magnetfelds vorgesehen ist, welches durch die Spule erzeugt ist, und daß ein Ring (24) vorgesehen ist, der eine Kurzschlußwindung bildet und die Schmalseite (23) der Spule (21) umgibt, welche die schrägverlaufenden Verbindungen zwischen den Windungen aufweist.

2. Induktionsapparat zum Induktionsheizen von vorbeilaufenden Metallbändern nach Anspruch 1, dadurch gekennzeichnet, daß der Ring (24) sich im wesentlichen über die gesamte Höhe der Spule (21) erstreckt.

3. Induktionsapparat zum Induktionsheizen von vorbeilaufenden Metallbändern nach Anspruch 1 oder 2, dadurch gekennzeichnet, daß der Ring (24) durch ein Rohr gebildet ist, dessen Stärke bzw. Dicke größer ist als die Eindringtiefe für die Frequenz des Induktionsstroms.

4. Induktionsapparat zum Induktionsheizen von vorbeilaufenden Metallbändern nach einem der Ansprüche 1 bis 3, dadurch gekennzeichnet, daß der Ring (24) die Verbindungsschienen (27) der Spule umgibt.

## Claims

1. Induction heater (3,4) for induction-heating moving metal strips (1,22,31) for purposes of thermal or covering treatment, constituted by a coil in the form of a flattened helix, comprising windings (11-13) interconnected by an oblique connection (14) disposed on the small side of the coil and surrounding the metal strip (1,22,31) in motion, characterised in that means (24-26) are provided for suppressing the transverse component of the magnetic field created by said coil, and in that it comprises a ring (24) constituting a short-circuit winding surrounding the small side (23) of the coil (21) comprising the oblique connections between windings.

2. Induction heater for heating moving metal strips by induction, according to claim 1, characterised in that said ring (24) extends substantially over the entire length of the coil (21).

3. Induction heater for heating moving metal strips by induction according to claim 1 or 2, characterised in that the ring (24) is constituted by a tube whose thickness is greater than the depth of the skin for the frequency of the induction current.

4. Induction heater for heating moving metal strips by induction according to one of claims 1 to 3, characterised in that said ring (24) surrounds the connector strips (27) of the coil.
